# EUROPEAN PATENT SPECIFICATION

(11) **EP 2 826 168 B1**
(45) Date of publication and mention of the grant of the patent: **16.06.2021**
(21) Application number: 13761524.1
(22) Date of filing: 15.03.2013
(51) Int. Cl.: H04B 7/26, H04J 3/00

(54) **METHOD AND SYSTEM FOR HANDLING UE BEHAVIOR IN INTER-BAND CARRIER AGGREGATION WITH CELL SPECIFIC TDD CONFIGURATION**
VERFAHREN UND SYSTEM ZUR HANDHABUNG EINES BENUTZERGERÄTEVERHALTENS BEI EINER BRANDBREITENÜBERGREIFENDEN TRÄGERAGGREGATION MIT ZELLSPEZIFISCHER TDD-KONFIGURATION
PROCÉDÉ ET SYSTÈME DE GESTION DU COMPORTEMENT D'UN ÉQUIPEMENT D'UTILISATEUR DANS UNE AGRÉGATION DE PORTEUSES INTERBANDE DOTÉE D'UNE CONFIGURATION DE CELLULE SPÉCIFIQUE TDD

(30) Priority: 16.03.2012 IN 973CH2012
(43) Date of publication of application: 21.01.2015
(73) Proprietor: Samsung Electronics Co., Ltd., Suwon-si, Gyeonggi-do 443-742 (KR)
(72) Inventor: BAGHEL, Sudhir Kumar, Bangalore 560037 (IN); INGALE, Mangesh Abhimanyu, Bangalor 560093 (IN)
(74) Representative: HGF
(86) International application number: PCT/KR2013/002095
(87) International publication number: WO 2013/137677

(56) References cited:
- US-A1- 2011 292 851
- ASUSTEK ET AL: "DRX operation with different TDD UL/DL configurations", 3GPP DRAFT; R2-120360 DRX OPERATION WITH DIFFERENT TDD UL-DL CONFIGURATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 30 January 2012 (2012-01-30), XP050565142, [retrieved on 2012-01-30]
- RENESAS MOBILE EUROPE: "Discussion on DRX for CC specific TDD configuration", 3GPP DRAFT; R2-120130 DISCUSSION ON DRX FOR CC SPECIFIC TDD CONFIGURATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Dresden, Germany; 20120206 - 20120210, 31 January 2012 (2012-01-31), XP050565296, [retrieved on 2012-01-31]
- LG ELECTRONICS: "Overall issues on half-duplex operation based TDD CA with different UL-DL configurations", 3GPP DRAFT; R1-120421 HD BASED DIFFERENT TDD CA (FINAL), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050562910, [retrieved on 2012-01-31]
- ERICSSON ET AL.: 'Operating principles of interband TDD CA with different UL-DL configurations' R1-112079, 3GPP TSG-RAN WG1 #66 22 August 2011, ATHENS, GREECE, XP050537267
- ERICSSON ET AL.: 'On support of different TDD UL-DL configurations on different bands' R1-114414, 3GPP TSG-RAN WG1 #67 14 November 2011, SAN FRANCISCO, XP050562504
- HAUWEI ET AL.: 'DRX operation of different TDd DL/UL configuration' R2-120069, 3GPP TSG-RAN WG2 MEETING #77 06 February 2012, DRESDEN, GERMANY, XP050565272
- ERICSSON ET AL.: 'Different TDD configurations in inter-band CA' R2-120465, 3GPP TSG-RAN WG2 #77 06 February 2012, DRESDEN, GERMANY, XP050565401

## Description

### Technical Field

The present invention relates to inter-band carrier aggregation (CA) and more particularly relates to addressing User Equipment (UE) behavior during overlapped uplink-downlink sub frames of different component carriers in inter-band CA with cell specific TDD configuration.

### Background Art

In 3rd Generation Partnership Project (3GPP) Long Term Evolution (LTE) and LTE-Advanced systems, the required spectral efficiency and requested peak data rates for downlink (DL) and uplink (UL) can be achieved with Carrier Aggregation (CA). CA is one of the promising technologies that enhance the data throughput using multiple component carriers (CCs). It is a highly demanded feature from a network operator perspective, since it also enables the aggregation of different frequency spectrum fragments and offers a way out of the spectrum crunch. CA aggregates multiple CCs and jointly uses them for transmission to/from a single User Equipment (UE). CA is supported in both Frequency Division Duplex (FDD) and Time Division Duplex (TDD) operation modes. LTE-Advanced cellular system specified by 3GPP supports two types of CA techniques, namely, intra-band CA and inter-band CA.

In inter-band CA, it is possible to support different uplink-downlink configurations on different carriers on different frequency bands which are far apart. With cell specific TDD configuration on each CC even though there is a possibility of overlap of DL-UL sub frames of involved component carriers; the UE behavior for monitoring Physical Downlink Control Channels (PDCCH) sub frames during the DL-UL overlap depends on UE implementation.

The full duplex UE implementation handles the overlap situation by supporting simultaneous reception (DL) and transmission (UL) in the respective configured CC. In half duplex UE implementations, where the UE is not capable of simultaneous reception and transmission in overlapped DL-UL sub frames of the respective configured CC on different frequency bands, the UE behavior has to be specified.

Existing methods such as follow PCell, union and intersection specify UE behavior for monitoring PDCCH and handling the Discontinuous Reception (DRX) timers related to the PDCCH sub frames only for full duplex UE implementation. These existing methods limit only to UE implementations capable of simultaneous reception and transmission in overlapped DL-UL sub frames. Also, existing methods are ambiguous to specify additional details required by the UE when the UE implementations do not support simultaneous transmission and reception.

In the light of above discussion, a method and system to define UE behavior to monitor PDCCH sub frame and handling the DRX timers for UE's not capable of simultaneous reception and transmission in overlapped DL-UL sub frames in inter-band carrier aggregation with cell specific TDD configuration is appreciated.

Asustek et al, "Drx Operation With Different Tdd U1/D1 Configurations", 3GPP Draft; R2-120360 Drx Operation With Different Tdd U1-D1 Configurations, 3rd Generation Partnership Project (3GPP), Mobile Competence Centre ; 650, Route Des Lucioles ; F-06921 Sophia-Antipolis Cedex; France, 30 January 2012, Vol. RAN WG2, No. Dresden, Germany; 6-10 February 2012, XP050565142 [X] 1-30 Par. 1 , Par. 2; Method C: "Following The Intersection Of The PDCCH Sub Frames Of Cells". This document considers the support of inter-band carrier aggregation for TDD DL and UL.

### Disclosure of Invention

### Technical Problem

Certain embodiments of the present invention aim to provide a method and system that define User Equipment (UE) behavior to monitor PDCCH sub frame, in which the UE is capable of carrier aggregation but not capable of simultaneous reception and transmission in overlapped Downlink (DL)-Uplink (UL) sub frames in inter-band Carrier Aggregation (CA) with cell specific Time Division Duplex (TDD) configuration.

Another aim of certain embodiments of the invention is to provide a method to address the UE behavior for handling Discontinuous Reception (DRX) timers when UE is not capable of simultaneous reception and transmission in overlapped Downlink (DL)-Uplink (UL) sub frames in inter-band carrier aggregation with cell specific TDD configuration.

### Solution to Problem

The invention is defined by the independent claims. When the term "embodiment" is used for describing an unclaimed combination of features, it has to be understood as referring to examples useful for understanding the present invention.

### Advantageous Effects of Invention

The present invention is capable of defining User Equipment (UE) behavior to monitor PDCCH sub frame, in which the UE is capable of carrier aggregation but not capable of simultaneous reception and transmission in overlapped Downlink (DL)-Uplink (UL) sub frames in inter-band Carrier Aggregation (CA) with cell specific Time Division Duplex (TDD) configuration.

### Brief Description of Drawings

This invention is illustrated in the accompanying drawings, throughout which like reference letters indicate corresponding parts in the various figures. The embodiments herein will be better understood from the following description with reference to the drawings, in which:
FIG. 1 illustrates various modules of User Equipment (UE), according to embodiments as disclosed herein;
FIG. 2 illustrates spacing of Component Carriers (CCs) in intra-frequency Carrier Aggregation (CA) and inter-frequency Carrier Aggregation;
FIG. 3 illustrates the component carriers in intra-band Carrier Aggregation with same TDD configuration;
FIG. 4 illustrates the Component Carriers in inter-band Carrier Aggregation with cell-specific TDD configuration;
FIG. 5 illustrates existing methods to identify PDCCH sub frame in inter-band Carrier Aggregation with cell specific TDD configuration; and
FIG. 6 illustrates resultant TDD configuration applicable to both Primary cell (PCell) and Secondary cell (SCell), according to embodiments as disclosed herein.

### Mode for the Invention

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve a method and system to handle behavior of User Equipment (UE), where the UE is capable of carrier aggregation but not capable of simultaneous reception and transmission in overlapped Downlink (DL)-Uplink (UL) sub frames during inter-band carrier aggregation with cell specific TDD configuration. The method specifies whether the UE is allowed or not allowed to monitor the PDCCH sub frames during overlap of DL-UL sub frames by signaling the UE with a resultant TDD configuration that is applicable to the PCell and one or more SCells. The method also addresses handling of the DRX timers by defining the active time for common DRX operation by the UE for all component carriers.

In an embodiment, the network signals the resultant TDD configuration through Radio Resource Control (RRC) signaling either in System Information broadcast or dedicated RRC message or through physical layer signaling.

The method also enhances the procedures and UE behavior specified in 3GPP TS 36.321, Evolved Universal Terrestrial Radio Access (E-UTRA); Medium Access Control (MAC); Protocol specification.

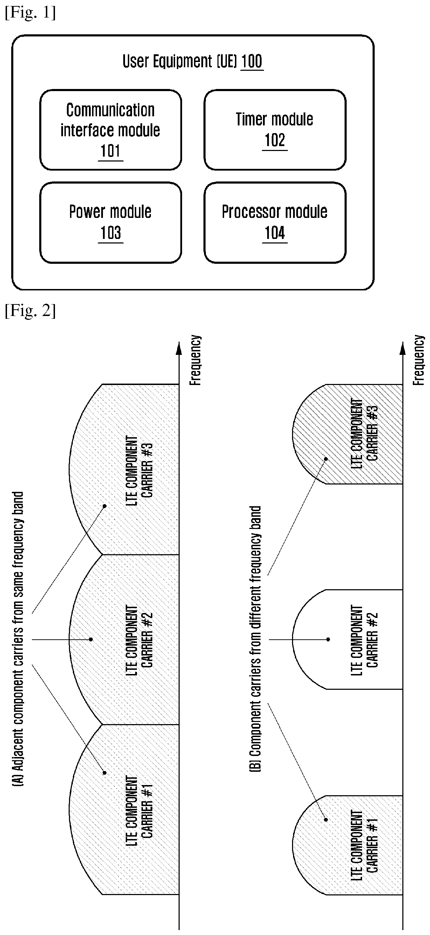

Referring now to the drawings, and more particularly to FIGS. 1 through 6, where similar reference characters denote corresponding features consistently throughout the figures, there are shown preferred embodiments.

FIG. 1 illustrates various modules of User Equipment (UE), according to embodiments as disclosed herein. The figure depicts a UE 100 which comprises a communication interface module 101, a timer module 102, a power module 103 and a processor module 104. The communication interface module 101 enables the UE 100 to communicate with the network for transmission and reception of data and signaling information. The timer module 102 comprises multiple timers including but not limited to the DRX timers for PDCCH monitoring, Hybrid Automatic Repeat Request (HARQ) Round Trip Time (RTT) timer, DRX-inactivity timer and DRX- retransmission timer. The power module 103 comprises a battery to power UE 100 to perform plurality of operations. The processor module 104 processes various instructions for the UE 100 to perform plurality of operations such as controlling timers for various processes, processing received signaling messages and so on.

In an embodiment, the UE may also comprise of several other modules which fall within the scope of the invention known to a person with ordinary skill in the art.

FIG. 2 illustrates spacing of Component Carriers (CCs) in intra-frequency Carrier Aggregation (CA) and inter-frequency CA.

The upper part of Figure 2 depicts spacing of multiple Long Term Evolution (LTE) Component Carriers (CCs) 1, 2, 3 for intra-band Carrier Aggregation (CA). In intra-band CA the available component carriers are adjacent to each other in that frequency band. Normally, when intra-band CA is supported in TDD all the component carriers have same TDD configuration for DL and UL to avoid interference due to DL-UL sub frame overlap from the aggregated carriers. Thus, normally cell specific CC are not supported in intra-band CA.

The lower part of Figure 2 depicts spacing of multiple Long Term Evolution (LTE) Component Carriers (CCs) 1, 2, 3 for inter-band Carrier Aggregation (CA). In inter-band CA the available component carriers are separated from each other in different frequency bands. In inter-band CA it is possible to support different uplink-downlink TDD configurations on different component carriers, with cell specific TDD configuration on each component carrier even though there is possibility of overlap of DL-UL sub frames of involved component carriers. The interference due to DL-UL sub frame overlap from the aggregated carriers is not a concern as it turns out to be negligible in inter-band CA since the component carriers are sufficiently separated in frequency.

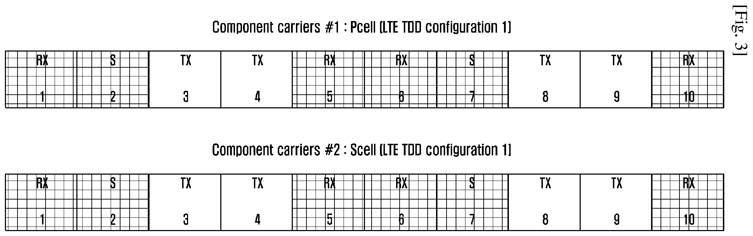

FIG. 3 illustrates the component carriers (CCs) from same frequency band in intra-band CA with same TDD configuration. The figure depicts two component carriers CC#1 and CC#2 of primary cell (PCell) and secondary cell (SCell) respectively with same TDD configuration. The TDD configuration of a component carrier refers to the pattern of arrangement of DL and UL sub frame in time for radio frame duration equal to 10 milliseconds (ms). The LTE radio frame consists of 10 sub frames each of 1 ms duration. There are seven pre-defined TDD configurations in LTE specification (TS 36.211). In FIG. 3 the sub frame labeled as "RX" refers to DL sub frame in which the UE 100 expects data reception from the network while the sub frame labeled as "TX" refers to UL sub frame in which the UE 100 is allowed to perform data transmission towards the network. The sub frame labeled as "S" refers to special sub frame used by the UE 100 to switch from reception mode to transmission mode. Thus, the UE 100 is allowed to perform either DL (reception)-or UL (transmission) for corresponding sub frame in each component carrier as no overlap between DL-UL sub frames occurs.

In accordance with LTE Release 10 specification (TS 36.331) in context of Carrier Aggregation (CA), the primary cell (PCell) is the cell operating on the primary frequency, in which the UE 100 either performs the initial connection establishment procedure or initiates the connection re-establishment procedure, or is the cell indicated as the primary cell in the handover procedure. The secondary cell (SCell) is the cell operating on a secondary frequency, which may be configured once an RRC connection is established in the PCell, and the SCell may be used to provide additional radio resources. For the UE 100 in RRC_CONNECTED not configured with CA there is only one serving cell comprising of the primary cell. For the UE 100 in RRC_CONNECTED configured with CA the term 'serving cells' is used to denote the set of one or more configured carriers comprising of one primary cell and all other secondary cells.

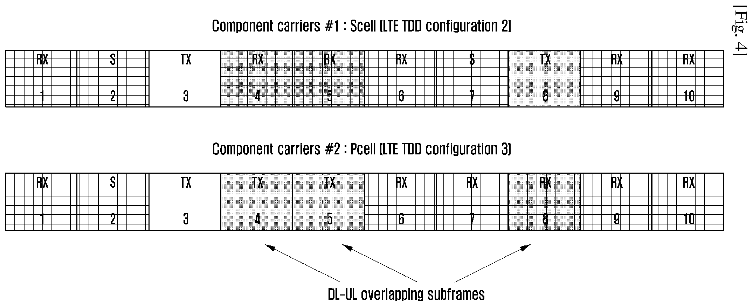

FIG. 4 illustrates the component carriers CC#1 and CC#2 from different frequency bands in inter-band CA with cell-specific TDD configuration. The cell-specific TDD configuration means the TDD configuration of one or more component carrier is not the same. The figure depicts component carrier #1 (from frequency band 1) of SCell with LTE TDD configuration specific to SCell which is different from the LTE TDD configuration of component carrier #2 (from frequency band 2) of PCell specific to PCell. The cell specific TDD configurations are among the configurations pre-defined in the 3GPP specification (TS 36.211).

The ten sub frames in each of PCell and SCell consists either RX (reception sub frames) relating to downlink (DL) operation or TX (transmission sub frames) relating to uplink (UL) operation and one special sub frame. As depicted in figure, both PCell and SCell have component carriers that follow different (cell specific) LTE TDD configuration. In such scenario of CA operation there exist DL-UL overlap of sub frames of respective component carrier and the UE 100 behavior for PDCCH monitoring and handling DRX timers has to be specified. For example, sub frame #4 of component carrier #1 of SCell indicates RX operation while the corresponding sub frame #4 of component carrier#2 of PCell indicates TX operation. The UE 100 should be specified (addressed) when it is allowed to monitor PDCCH (to find next PDCCH sub frame) and the way UE 100 has to handle the DRX timers.

### Common DRX configuration and common DRX operation in LTE Release 10 specification TS 36.300:

In order to enable reasonable UE battery consumption, DRX in Evolved Universal Terrestrial Radio Access network (E-UTRAN) is characterized as Per UE mechanism (as opposed to per radio bearer).

In CA operation, whenever a UE is configured with only one serving cell (i.e. PCell) Rel-8/9 DRX applies. In other cases, the same DRX operation applies to all configured and activated serving cells (i.e. identical active time for PDCCH monitoring).

The specification above infers that DRX configuration is common across all component carriers and common DRX operation is applied across all configured and activated component carriers.

### Handling of DRX timers in LTE Release 10 specification (TS 36.321) states the following definitions:

**PDCCH-subframe:** Refers to a subframe with PDCCH or, for an RN with R-PDCCH configured and not suspended, to a subframe with R-PDCCH. For Frequency Division Duplex (FDD) UE operation, this represents any subframe; for TDD, only downlink subframes and subframes including DwPTS. For RNs with an RN subframe configuration configured and not suspended, in its communication with the E-UTRAN, this represents all downlink subframes configured for RN communication with the E-UTRAN.

**Active Time:** Time related to DRX operation, during which the UE monitors the PDCCH , as defined in subclause 5.7 in of 3GPP specification TS 36.321.

**DRX-InactivityTimer:** Specifies the number of consecutive PDCCH-subframe(s) after successfully decoding a PDCCH indicating an initial UL or DL user data transmission for this UE.

**DRX-RetransmissionTimer:** Specifies the maximum number of consecutive PDCCH-subframe(s) for as soon as a DL retransmission is expected by the UE.

**onDurationtimer:** Specifies the number of consecutive PDCCH-subframe(s) at the beginning of a DRX Cycle.

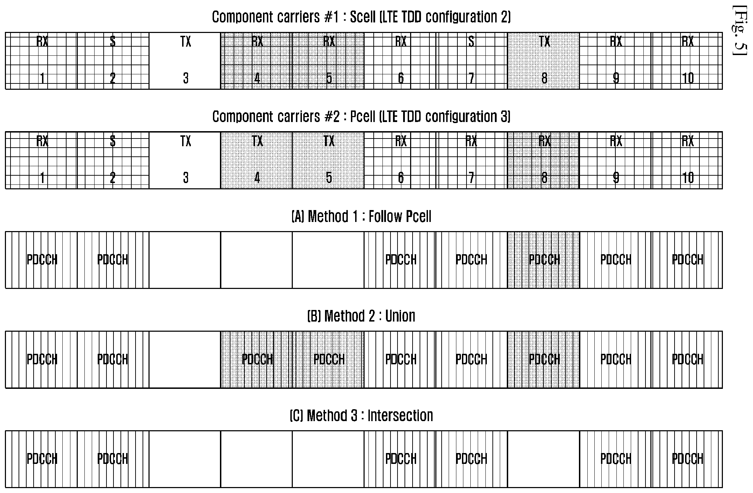

FIG. 5 illustrates existing methods to identify PDCCH sub frame in inter-band CA with cell specific TDD configuration. The figure depicts DL-UL overlap between sub frames of component carrier#1 of SCell and component carrier #2 of PCell as each component carrier has cell specific TDD configuration selected from the existing pre-defined configurations in 3GPP specification (TS 36.211). The figure also depicts three methods according to prior art defining UE 100 behavior for inter-band CA with cell specific TDD configuration that addresses issues of DL-UL sub frame overlap. The methods are namely (A) Follow PCell - method 1, (B) union- method 2 and (C) Intersection - method 3. Method 1 states the UE 100 should follow PCell TDD configuration for PDCCH-sub frame identification. Method 2 states the UE 100 should follow union of DL sub frames of cell specific TDD configurations for PDCCH-sub frame identification. The method 3 states UE 100 should follow intersection of DL sub frames of cell specific TDD configurations for PDCCH-sub frame identification. As described earlier all the DL sub frames correspond to RX sub frames depicted the figure.

In FIG. 5, the label "PDCCH" for methods 1, 2, and 3 corresponds to PDCCH-sub frame according to definition in LTE Release 10 specification (TS 36.321). The UE 100 considers the identified PDCCH-sub frame for the three DRX timers comprising DRX-inactivity timer, DRX-retransmission timer and onDuration timer based on any of three methods. The UE 100 has prior knowledge of the TDD configuration of the PCell and SCell(s) that are configured. The UE could follow any of the three methods to find the next PDCCH sub frame and it applies to all the DRX timers related to PDCCH-sub frames. The PDCCH-sub frames identified by any of the above methods could be used by the UE 100 for PDCCH monitoring to find the next PDCCH sub frame and it applies to all DRX timers related to PDCCH. However, due to presence of overlapped DL-UL sub frames these existing methods are applicable when UE 100 implementation is capable of simultaneous reception and transmission (full duplex TDD UE implementation) in overlapped DL-UL sub frames of component carrier #1 and component carrier # 2. When method 1 (Follow PCell) is applied, the full duplex TDD UE is allowed to monitor PDCCH in sub frame #8 in CC#2 and at the same time allowed to transmit in corresponding UL sub frame in CC#1. On similar lines if method 2 (Union) is applied, the full duplex TDD UE is allowed to monitor PDCCH in sub frame #8 in CC#2, sub frame #4 and #5 in CC#1 and at the same time allowed to transmit in corresponding UL sub frame in respective CC.

The UE 100 implementation which is not capable of simultaneous reception and transmission (half duplex TDD UE implementation) in overlapped DL-UL sub frames can monitor PDCCH in PDCCH-sub frames identified by method 3 (intersection). When UE 100 adopts method 1 or method 2, the UE 100 behavior for PDCCH monitoring in the shaded PDCCH-sub frames (sub frame #8 in method 1 and sub frame #4, #5 and #8 in method 2 needs to be further specified. The network (eNB) additionally needs to inform the UE whether transmission or reception is supported in overlapped sub frames as half duplex capable UE 100 can perform either of transmission or reception operation at given time instant. The existing methods fail to specify this further behavior of UE 100 and cannot be used when the UE 100 is not capable of simultaneous reception and transmission (half duplex TDD UE implementation).

With the existing methods the half duplex UE can perform usual PDCCH monitoring in rest of the identified PDCCH-sub frames that do not have DL-UL overlap in the respective component carriers.

The method disclosed provides plurality of embodiments to address the UE's 100 behavior during DL-UL overlapped sub frames when the UE 100 is not capable of simultaneous reception and transmission (half duplex TDD UE implementation) in respective component carrier. The method specifies whether the UE 100 has to perform transmission or reception during the identified DL-UL overlap through the network configuration.

In one embodiment, the method enables the UE 100 to behave as specified by existing method-1 (follow PCell) and in addition specifies conditions the UE 100 should check to decide whether to transmit or not to transmit during identified DL-UL overlap. For example, referring to method -1 (Follow PCell) of FIG 5, if network configures DL assignment in overlapped DL-UL sub frame on DL sub frame #8 of PCell then UE 100 should not transmit on corresponding UL sub frame of SCell. Even though SCell has an UL sub frame in TDD configuration 2 at position#8, the UE is not allowed to transmit on UL sub frame. In another example, referring to method-2 (union) of FIG. 5 if the network configures UL grant in overlapped DL-UL sub frame on UL sub frames #4 and #5 of PCell and DL assignment in DL sub frame #8 of PCell then UE 100 should not monitor PDCCH on the identified PDCCH-sub frame #4 and #5. Even though SCell has a DL sub frames in position #4 and #5, UE 100 is not allowed to monitor the PDCCH on those DL sub frame. UE is allowed to monitor PDCCH on the identified PDCCH-sub frame #8 while it is not allowed to transmit on corresponding UL sub frame of SCell.

All sub frames of cell specific TDD configuration of each component carrier are allowed sub frames, except the overlapped sub frames where allowed sub frame on one component carrier correspond to not allowed sub frame on another component carrier based on network configuration.

In an embodiment, the network configuration is semi-static through RRC signaling or is dynamic through physical layer signaling.

In an embodiment, the UE 100 behavior is specified as follows:

In case of inter-band TDD CA, both half duplex and full duplex UE implementation should consider the union of PDCCH sub frames of configured component carriers for PDCCH sub frame identification (irrespective of whether the component carrier is active or not active).

In an embodiment, the UE 100 behavior is specified as follows:

In case of inter-band TDD CA, UE implementation not capable of simultaneous reception and transmission in overlapped DL-UL sub frames of respective component carriers on different bands, the UE should not monitor the PDCCH-sub frame of a component carrier if uplink transmission is scheduled in the corresponding UL sub frame of the other component carrier.

In an embodiment, the UE 100 behavior is specified as follows:

In case of inter-band TDD CA, UE implementation not capable of simultaneous reception and transmission in overlapped DL-UL sub frames of respective component carriers on different bands, UE should not transmit on the UL sub frame of a component carrier if DL assignment is scheduled in the corresponding DL sub frame of the other component carrier.

In an embodiment, all sub frames of cell specific TDD configuration of each component carrier are allowed sub frames, except the overlapped sub frames where allowed sub frame on one component carrier correspond to not allowed sub frame on another component carrier based on network configuration.

According to LTE Release 10 specification (TS 36.331), the SystemInformation-BlockType1 (SIB1) contains information about the TDD configuration. Normally, the UE 100 follows the TDD configuration indicated by the PCell. According to LTE Release 10 specification (TS 36.300), when CA is deployed frame timing, System Frame Number (SFN) and TDD-Configuration are aligned across cells that can be aggregated. The TDD CA capable UE 100 has the same TDD configuration for all serving cells. This is true for intra-band CA while for inter-band CA, UE 100 could be configured with cell specific TDD configuration for each component carrier. The SIB 1 of each component carrier can signal the cell specific TDD configuration. However, for UE implementation not capable of simultaneous reception and transmission in overlapped DL-UL sub frames during inter-band CA, the allowed/not allowed sub frame configuration needs to be signaled to the UE 100.

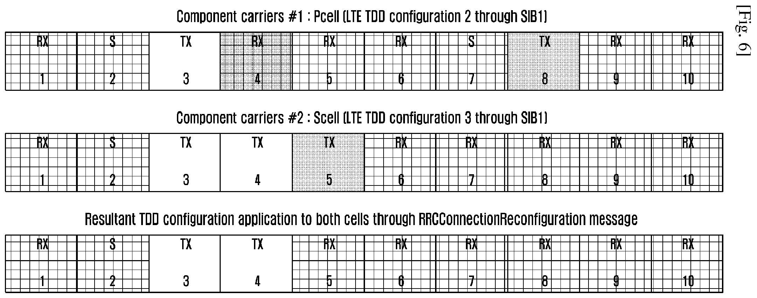

FIG. 6 illustrates resultant TDD configuration applicable to both Primary cell (PCell) and Secondary cell (SCell), according to embodiments as disclosed herein. The figure depicts component carrier #1 of PCell with LTE TDD configuration 2 and component carrier #2 of SCell with LTE TDD configuration 3 to which the UE 100 is configured through SIB1. The figure also depicts the resultant TDD configuration applicable to both cells signaled to the UE 100 by the network through RRC connection reconfiguration message. The dedicated signaling from the network to the UE 100 comprising resultant TDD configuration provides the UE 100 with configuration for not allowed sub frames (shaded sub frames RX - sub frame #4, TX - sub frame #8 of PCell and TX- sub frame #5 of SCell). The resultant TDD configuration configures not allowed sub frame #4 as "TX - UL sub frame", not allowed sub frame #5 as "RX - DL sub frame" and not allowed sub frame #8 as "RX - DL sub frame". The resultant TDD configuration turns out to be TDD configuration 4 from the pre-defined TDD configurations in 3GPP specification TS 36.211.

In an embodiment, the network (eNB) signals the resultant TDD configuration to the UE 100 either through dedicated signaling or dynamic physical layer signaling so that UE is aware of allowed/not allowed sub frames from the cell specific TDD configuration of each component carrier signaled in SIB1.

In another embodiment the network (eNB) signals the resultant TDD configuration through the RRC Connection Reconfiguration message when it configures the SCell(s).

In an embodiment, the resultant TDD configuration is from among the existing 3GPP pre-defined TDD configurations specified in said 3GPP specification TS 36.211.

In an embodiment, the resultant TDD configuration is other than the existing 3GPP pre-defined TDD configurations specified in said 3GPP specification TS 36.211.

In an embodiment, the resultant TDD configuration of the configured component carriers is same as the TDD configuration of the PCell.

In an embodiment, the method also specifies expected UE behavior while handling allowed PDCCH-sub frames to be considered for DRX timers based on the signaled resultant TDD configuration. The method ascertains the UE 100 behavior for handling DRX timers when DRX cycle is configured in the UE 100. The method specifies the UE 100 to monitor the PDCCH and consider the monitored PDCCH sub frame as part of active time of said DRX cycle if the sub frame is not part of configured measurement gap and is not configured as UL sub frame in the resultant TDD configuration. Thereafter with the sub frame considered as PDCCH sub frame, the method specifies the UE 100 to start Hybrid Automatic Repeat Request (HARQ) Round Trip Time (RTT) timer for the HARQ process and stop DRX retransmission timer for the HARQ process.

The method further allows the UE 100 to start DRX-Inactivity timer if the monitored PDCCH sub frame indicates either a new DL assignment and/or new grant for UL transmission.

In an embodiment, the method specifies expected UE behavior while handling not allowed (forbidden) PDCCH-sub frames to be considered for DRX timers based on the signaled resultant TDD configuration. The method ascertains the UE 100 behavior for handling DRX timers when DRX cycle is configured in UE. The method forbids the UE 100 to monitor the PDCCH and forbids the UE to consider the PDCCH sub frame as part of active time of said DRX cycle if the (not allowed PDCCH) sub frame is not part of configured measurement gap and if the (not allowed) sub frame is configured as UL sub frame in the resultant TDD configuration. The method further specifies the UE not to increment the onDurationTimer, if the onDurationTimer is running during the monitoring of PDCCH sub frame. Further, the method forbids incrementing the DRX-Inactivity timer during the not allowed (forbidden) PDCCH sub frame.

Thereafter, the method forbids the UE 100 to increment DRX retransmission timer for the HARQ process.

The embodiments disclosed herein can be implemented through at least one software program running on at least one hardware device and performing network management functions to control the elements. The elements shown in Fig. 1 include blocks which can be at least one of a hardware device, or a combination of hardware device and software module.

## Claims

1. A method for handling behavior of a User Equipment, UE, (100) in a wireless communication system supporting inter-band carrier aggregation, wherein said method comprises:
receiving a first Time Division Duplex, TDD, configuration for a Primary Cell, PCell, and a second TDD configuration for a Secondary Cell, SCell, wherein the first and second TDD configurations are different;
when a first sub frame in the PCell is a downlink sub frame based on the first TDD configuration and the corresponding sub frame in the SCell is an uplink sub frame based on the second TDD configuration, not allowing the UE (100) to transmit any signal or channel on the SCell in the first sub frame, and allowing the UE (100) to monitor a Physical Downlink Control Channel, PDCCH, on at least one of the PCell and the SCell in the first sub frame; and
when a second sub frame in the PCell is an uplink sub frame based on the first TDD configuration and the corresponding sub frame in the SCell is a downlink sub frame based on the second TDD configuration, not allowing the UE (100) to monitor any downlink PDCCH transmission on the SCell in the second sub frame, and allowing the UE to transmit a signal or channel on the PCell in the second sub frame;
wherein the UE (100) is not capable of simultaneous reception and transmission in the PCell and the SCell.

2. A User Equipment, UE, (100) for a wireless communication system supporting inter-band carrier aggregation, wherein the UE (100) comprises:
an integrated circuit further comprising at least one processor (104);
at least one memory having a computer program code;
the at least one memory and the computer program code with the at least one processor (104) cause the UE (100) to:
receive a first Time Division Duplex, TDD, configuration for a Primary Cell, PCell, and a second TDD configuration for a Secondary Sell, SCell, wherein the first and second TDD configurations are different;
not allow to transmit any signal or channel on the SCell in a first sub frame and allow to monitor a Physical Downlink Control Channel, PDCCH, on at least one of the PCell and the SCell in the first sub frame when the first sub frame in the PCell is a downlink sub frame based on the first TDD configuration and the corresponding sub frame in the SCell is an uplink sub frame based on the second TDD configuration; and
not allow to monitor any downlink PDCCH transmission on the SCell in a second sub frame and allow to transmit a signal or channel on the PCell in the second sub frame when the second sub frame in the PCell is an uplink sub frame based on the first TDD configuration and the corresponding sub frame in the SCell is a downlink sub frame based on the second TDD configuration;
wherein the UE (100) is not capable of simultaneous reception and transmission in the PCell and the SCell.

## Patentansprüche

1. Verfahren zum Handhaben von Verhalten eines Benutzergeräts, UE, (100) in einem drahtlosen Kommunikationssystem, das Interband-Trägeraggregation unterstützt, wobei das Verfahren Folgendes umfasst:
Empfangen einer ersten Zeitteilungsduplex-TDD-Konfiguration für eine Primärzelle, PCell, und einer zweiten TDD-Konfiguration für eine Sekundärzelle, SCell, wobei die erste und die zweite TDD-Konfiguration unterschiedlich sind;
wenn ein erster Teilrahmen in der PCell ein Downlink-Teilrahmen basierend auf der ersten TDD-Konfiguration ist und der entsprechende Teilrahmen in der SCell ein Uplink-Teilrahmen basierend auf der zweiten TDD-Konfiguration ist, nicht Zulassen, dass das UE (100) ein Signal oder einen Kanal auf der SCell in dem ersten Teilrahmen überträgt, und Zulassen, dass das UE (100) einen physischen Downlink-Steuerkanal, PDCCH, auf zumindest einer von der PCell und der SCell in dem ersten Teilrahmen überwacht; und
wenn ein zweiter Teilrahmen in der PCell ein Uplink-Teilrahmen basierend auf der ersten TDD-Konfiguration ist und der entsprechende Teilrahmen in der SCell ein Downlink-Teilrahmen basierend auf der zweiten TDD-Konfiguration ist, nicht Zulassen, dass das UE (100) eine Downlink-PDCCH-Übertragung auf der SCell in dem zweiten Teilrahmen überwacht, und Zulassen, dass das UE ein Signal oder einen Kanal auf der PCell in dem zweiten Teilrahmen überträgt;
wobei das UE (100) nicht zum gleichzeitigen Empfangen und Übertragen in der PCell und der SCell in der Lage ist.

2. Benutzergerät, UE, (100) für ein drahtloses Kommunikationssystem, das Interband-Trägeraggregation unterstützt, wobei das UE (100) Folgendes umfasst:
eine integrierte Schaltung, die ferner zumindest einen Prozessor (104) umfasst;
zumindest einen Speicher, der einen Computerprogrammcode aufweist;
wobei der zumindest eine Speicher und der Computerprogrammcode mit dem zumindest einen Prozessor (104) das UE (100) zu Folgendem veranlassen:
Empfangen einer ersten Zeitteilungsduplex-TDD-Konfiguration für eine Primärzelle, PCell, und einer zweiten TDD-Konfiguration für eine Sekundärzelle, SCell, wobei die erste und die zweite TDD-Konfiguration unterschiedlich sind;
nicht Zulassen, dass ein Signal oder ein Kanal auf der SCell in einem ersten Teilrahmen übertragen wird und Zulassen, dass ein physischer Downlink-Steuerkanal, PDCCH, auf zumindest einer von der PCell und der SCell in dem ersten Teilrahmen überwacht wird, wenn der erste Teilrahmen in der PCell ein Downlink-Teilrahmen basierend auf der ersten TDD-Konfiguration ist und der entsprechende Teilrahmen in der SCell ein Uplink-Teilrahmen basierend auf der zweiten TDD-Konfiguration ist; und
nicht Zulassen, dass eine Downlink-PDCCH-Übertragung auf der SCell in einem zweiten Teilrahmen überwacht wird und Zulassen, dass ein Signal oder ein Kanal auf der PCell in dem zweiten Teilrahmen übertragen wird, wenn der zweite Teilrahmen in der PCell ein Uplink-Teilrahmen basierend auf der ersten TDD-Konfiguration ist und der entsprechende Teilrahmen in der SCell ein Downlink-Teilrahmen basierend auf der zweiten TDD-Konfiguration ist;
wobei das UE (100) nicht zum gleichzeitigen Empfangen und Übertragen in der PCell und der SCell in der Lage ist.

## Revendications

1. Procédé de gestion de comportement d'un équipement utilisateur, UE, (100) dans un système de communication sans fil prenant en charge l'agrégation de porteuses inter-bandes, dans lequel ledit procédé comprend :
la réception d'une première configuration duplex à répartition dans le temps, TDD, pour une cellule primaire, PCell, et d'une deuxième configuration TDD pour une cellule secondaire, SCell, dans lequel les première et deuxième configurations TDD sont différentes ;
lorsqu'une première sous-trame dans la PCell est une sous-trame de liaison descendante basée sur la première configuration TDD et que la sous-trame correspondante dans la SCell est une sous-trame de liaison montante basée sur la deuxième configuration TDD, la non-autorisation à l'UE (100) de transmettre tout signal ou canal sur la SCell dans la première sous-trame, et l'autorisation à l'UE (100) de surveiller un canal physique de commande de liaison descendante, PDCCH, sur au moins l'une de la PCell et la SCell dans la première sous-trame ; et
lorsqu'une deuxième sous-trame dans la PCell est une sous-trame de liaison montante basée sur la première configuration TDD et que la sous-trame correspondante dans la SCell est une sous-trame de liaison descendante basée sur la deuxième configuration TDD, la non-autorisation à l'UE (100) de surveiller toute transmission PDCCH en liaison descendante sur la SCell dans la deuxième sous-trame, et l'autorisation à l'UE de transmettre un signal ou canal sur la PCell dans la deuxième sous-trame ;
dans lequel l'UE (100) n'est pas capable de recevoir et de transmettre simultanément dans la PCell et la SCell.

2. Équipement utilisateur, UE, (100) pour un système de communication sans fil prenant en charge l'agrégation de porteuses inter-bandes, dans lequel l'UE (100) comprend :
un circuit intégré comprenant en outre au moins un processeur (104) ;
au moins une mémoire ayant un code de programme informatique ;
l'au moins une mémoire et le code de programme informatique avec l'au moins un processeur (104) amènent l'UE (100) à :
recevoir une première configuration duplex à répartition dans le temps, TDD, pour une cellule primaire, PCell, et une deuxième configuration TDD pour une cellule secondaire, SCell, dans lequel les première et deuxième configurations TDD sont différentes ;
ne pas autoriser la transmission de tout signal ou canal sur la SCell dans une première sous-trame et autoriser la surveillance d'un canal physique de commande de liaison descendante, PDCCH, sur au moins l'une de la PCell et la SCell dans la première sous-trame lorsque la première sous-trame dans la PCell est une sous-trame de liaison descendante basée sur la première configuration TDD et que la sous-trame correspondante dans la SCell est une sous-trame de liaison montante basée sur la deuxième configuration TDD ; et
ne pas autoriser la surveillance de toute transmission PDCCH de liaison descendante sur la SCell dans une deuxième sous-trame et autoriser la transmission d'un signal ou canal sur la PCell dans la deuxième sous-trame lorsque la deuxième sous-trame dans la PCell est une sous-trame de liaison montante basée sur la première configuration TDD et que la sous-trame correspondante dans la SCell est une sous-trame de liaison descendante basée sur la deuxième configuration TDD ;
dans lequel l'UE (100) n'est pas capable de recevoir et de transmettre simultanément dans la PCell et la SCell.
